# EUROPÄISCHE PATENTSCHRIFT

(11) **EP 4 421 307 B1**
(45) Veröffentlichungstag und Bekanntmachung des Hinweises auf die Patenterteilung: **04.02.2026**
(21) Anmeldenummer: 24156386.5
(22) Anmeldetag: 07.02.2024
(51) Int. Cl.: F03B 11/08, F03B 13/08, E02B 8/02

(54) **WASSERKRAFTWERK MIT EINER RECHENANORDNUNG**
HYDROELECTRIC POWER PLANT WITH A RAKE ARRANGEMENT
CENTRALE HYDROÉLECTRIQUE AVEC UN DISPOSITIF DE RÂTEAU

(30) Priorität: 13.02.2023 AT 500892023
(43) Veröffentlichungstag der Anmeldung: 28.08.2024
(73) Patentinhaber: ZT-Fritsch GmbH, 4400 Steyr Oberösterreich (AT)
(72) Erfinder: Fritsch, Rudolf, 4484 Kronstorf (AT)
(74) Vertreter: Hübscher & Partner Patentanwälte GmbH

(56) Entgegenhaltungen:
- EP-A1- 2 206 914
- WO-A1-2012/022434
- WO-A1-2019/002750
- DE-A1- 3 829 360
- DE-C1- 4 241 854

## Beschreibung

Die Erfindung bezieht sich auf ein Wasserkraftwerk mit einer Rechenanordnung zwischen Ober- und Unterwasser, die einen oberwassergespeisten, einer Turbine vorgelagerten Einlaufschacht, dessen unterhalb eines Oberwasserstandes endende Schachtkrone durch einen Rechen abgedeckt ist, und einen am Rechen aufliegenden, um eine Achse drehbaren Abstreifer umfasst.

Um eine von außen nicht sichtbare, einfach zu reinigende Rechenanordnung vorzusehen, ist es bekannt (WO 2012/022434 A1), den einer Turbine eines Wasserkraftwerks vorgelagerten Einlaufschacht mit einem die nach oben offene Schachtkrone abdeckenden Rechen zu versehen und dem Rechen einen aufliegenden Abstreifer zuzuordnen, der gegenüber dem Rechen verschoben oder verschwenkt werden kann, um das durch den Rechen zurückgehaltene Rechengut vom Rechen abzustreifen. Da die Schachtkrone über die Oberwassersohle vorragt, jedoch unterhalb des Wasserstands des Oberwassers endet, bleibt die Rechenanordnung zusammen mit der durch den Abstreifer gebildeten Reinigungseinrichtung vom Oberwasser bedeckt. Nachteilig ist allerdings, dass das Rechengut durch den Abstreifer vom Rechen in das Oberwasser gefördert wird und dass das Lösen insbesondere von sich an den Rechenstäben anlegenden dünnschichtigen Gutteilen, wie Laub, Papier, Folien u. dgl., trotz des Einsatzes von Abstreifern unbefriedigend bleibt.

Ähnliche Nachteile ergeben sich auch bei einer anderen bekannten Rechenanordnung (JP S53142739 U), bei der wiederum das vom Rechen zurückgehaltene Rechengut vom Oberwasser aus dem Rechenbereich abgeführt wird. Zum Unterschied zu der WO 2012/022434 A1, werden jedoch zur Reinigung des Rechens nicht auf dem Rechen aufliegende, um eine Achse drehbare Abstreifer, sondern in die Ringspalte zwischen konzentrischen Rechenringen eingreifende Reinigungsklauen eingesetzt, die bei einer Drehung des Rechens das sich zwischen den Rechenringen fangende Rechengut zur Oberfläche des Rechens fördern, um mit der Oberwasserströmung weitergefördert zu werden.

Schließlich ist eine Reinigungsvorrichtung für Regenwasser bekannt (CN 113529907 A), das nach einer Grobabscheidung von mitgeführten Gutteilchen einer Filterkammer mit einer konischen Siebplatte zur Feinabscheidung zugeführt wird. Diese konische Siebplatte mündet in einer mit einem Verschluss versehenen Abführleitung. Zur Siebreinigung ist ein um die Konusachse der Siebplatte drehbarer Abstreifer vorgesehen, der mithilfe eines im Zuge der Abführleitung angeordneten Turbinenrads antreibbar ist. Steigt aufgrund einer Verlegung der konischen Siebplatte der Wasserspiegel oberhalb der Siebplatte an, so wird der Verschluss der Abführleitung mit der Wirkung geöffnet, dass das durch die geöffnete Abführleitung abfließende Wasser das Turbinenrad und damit den Abstreifer antreibt, der den Schlamm von der konischen Siebplatte abstreift. Voraussetzung für die Funktion der bekannten Regenwasserreinigungsvorrichtung ist es demnach, dass für die konische Siebplatte eine nur zum Teil mit dem zu reinigenden Regenwasser gefüllte Filterkammer vorgesehen ist, die mit einem Schwimmer zur Betätigung des Verschlusses der Abführleitung ausgerüstet ist, was einen Einsatz einer solchen Siebanordnung zwischen dem Ober- und dem Unterwasser eines Wasserkraftwerks ausschließt.

Der Erfindung liegt somit die Aufgabe zugrunde, ein Wasserkraftwerk mit einer Rechenanordnung mit einem Unterwasserrechen so auszugestalten, dass nicht nur eine gute Reinigung des Rechens mithilfe eines Abstreifers sichergestellt werden kann, sondern auch ein einfacher Austrag des vom Rechen zurückgehaltenen Rechenguts in einen Unterwasserbereich ermöglicht wird.

Ausgehend von einer Rechenanordnung der eingangs geschilderten Art löst die Erfindung die gestellte Aufgabe dadurch, dass der Rechen einen sich in Durchströmrichtung verjüngenden, in einem Fallrohr mündenden Konus bildet, dass das Fallrohr an eine absperrbare, im Unterwasserbereich mündende Austragsleitung anschließt und dass der zwischen dem Fallrohr und dem Außenrand des konischen Rechens verlaufende Abstreifer um die Konusachse drehbar ist.

Der Rechen in Form eines sich in Durchströmrichtung verjüngenden Konus bildet für das Rechengut einen von der Schachtkrone gegen die Schachtmitte hin abfallenden Trichter, durch den zumindest ein Teil des Rechenguts zu einem an den Trichter angeschlossenen Fallrohr geführt wird und damit bereits aus dem Rechenbereich gelangt, um durch eine an das Fallrohr angeschlossene, bei Bedarf öffenbare Austragsleitung unter einer Umgehung der Turbine in einen Unterwasserbereich abgeleitet zu werden. Der sich an die Rechenlamellen anlegende, nicht unmittelbar zum Fallrohr gelangende Anteil des Rechenguts kann mit dem Abstreifer erfasst und entlang des Abstreifers zum Fallrohr gefördert werden. Der Rechengutaustrag wird vorteilhaft durch ein Öffnen der Austragsleitung verbessert, und zwar durch die dadurch bedingte axiale Strömung durch das Fallrohr, die auf den Trichterbereich durchgreift und im Trichterbereich zu einer Wirbelströmung führt, die das Lösen des Rechenguts von den Rechenlamellen und die Rechengutförderung zum Fallrohr unterstützt.

Um vorteilhafte Konstruktionsverhältnisse zu schaffen, kann der konische Rechen über seinen Umfang verteilte, in Richtung von Erzeugenden des Konus verlaufende Tragarme und auf den Tragarmen abgestützte, über die Tragarmlänge verteilte, zur Konusachse koaxiale Kreisringlamellen aufweisen.

Zur Lagerung des Abstreifers können ein auf dem Fallrohr drehbar gelagerter Führungsring und ein auf der Schachtkrone drehbar gelagerter, den Außenrand des konischen Rechens umschließender Tragring vorgesehen sein, zwischen dem und dem Führungsring sich der auf diesen beiden Ringen abstützende Abstreifer erstreckt. Zum Antrieb des Abstreifers kann der äußere Tragring mit einem Zahnkranz versehen werden, der mit einem Antriebsritzel kämmt, wobei sich einfache Konstruktionsverhältnisse ergeben.

Um einen stufenlosen Übergang vom konischen Rechen zum Fallrohr und damit einen unbehinderten Eintritt des Rechenguts in das Fallrohr zu ermöglichen, kann im Übergangsbereich vom Rechen zum Fallrohr ein mit einem Halsansatz in das Fallrohr eingreifender, kragenförmiger Leitring vorgesehen sein. Dieser Leitring darf allerdings die Drehung des Abstreifers um die Konusachse nicht beeinträchtigen. Aus diesem Grunde empfiehl es sich bei einer Abstützung des Abstreifers auf einem fallrohrseitigen Führungsring, den kragenförmigen Leitring auf dem Führungsring vorzusehen.

Das Austragen des Rechenguts durch ein zentral an den konischen Rechen angesetztes Fallrohr beschränkt die Größe des Rechenguts, das ja durch das Fallrohr vom Oberwasserbereich zum Unterwasser gefördert werden muss. Diese Bedingung kann in einfacher Art durch einen dem konischen Rechen vorgelagerten Grobrechen sichergestellt werden. Um hierfür keine gesonderte Rechenanlage im Oberwasserbereich vorsehen zu müssen, kann die Schachtkrone oberhalb des konischen Rechens mit einem ebenen Rechen abgedeckt werden, der diese Aufgabe dadurch erfüllt, dass der gegenseitige Abstand der gegebenenfalls kreuzweise verlaufenden Rechenstäbe kleiner als der Durchmesser des Fallrohrs gewählt wird. Dieser zusätzliche Rechen hält somit Gutteile mit einer Erstreckung zurück, die das Austragen dieser Gutteile durch das Fallrohr gefährden könnte.

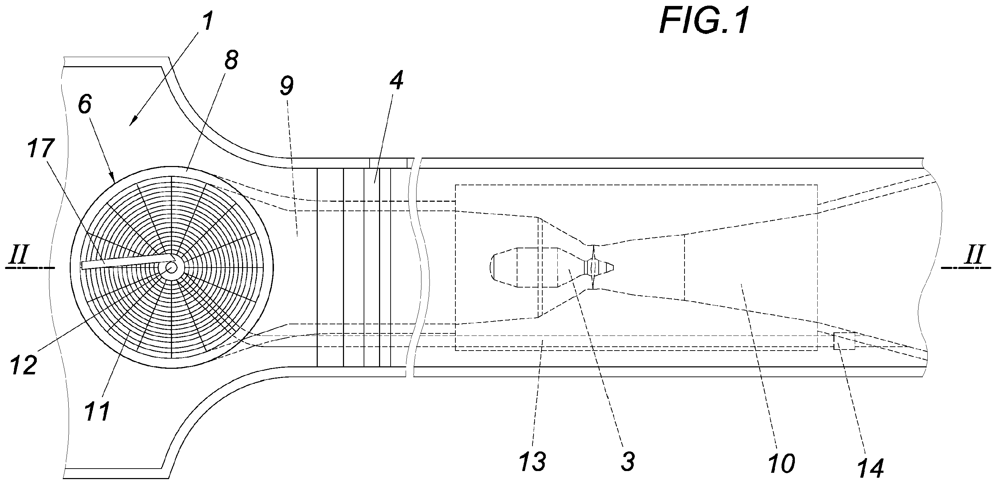

In der Zeichnung ist der Erfindungsgegenstand beispielsweise dargestellt. Es zeigen
- Fig. 1: ein Wasserkraftwerk mit einer erfindungsgemäßen Rechenanordnung in einer schematischen Draufsicht,

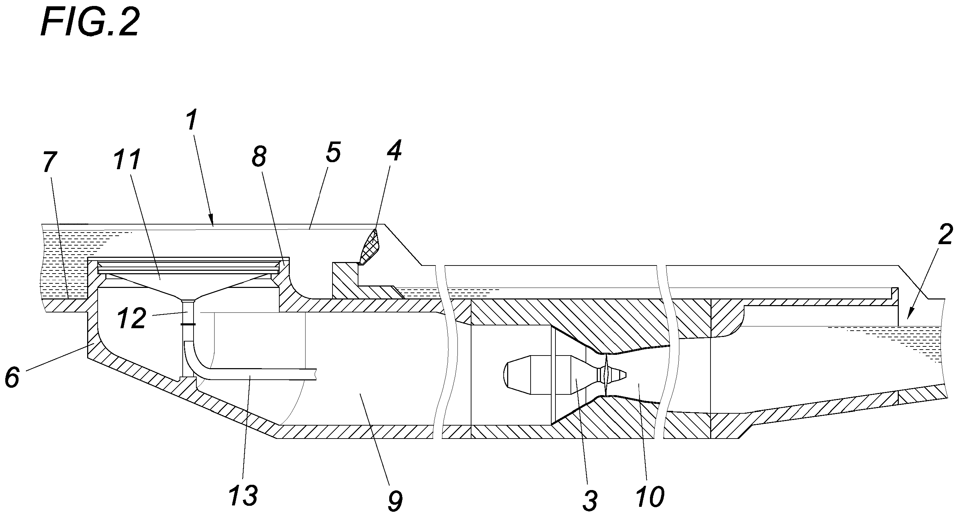

- Fig. 2: einen Schnitt nach der Linie II-II der Fig. 1,
- Fig. 3: eine zum Teil aufgerissene Draufsicht auf die Schachtkrone mit dem konischen Rechen in einem größeren Maßstab,
- Fig. 4: den die Schachtkrone abdeckenden konischen Rechen ausschnittsweise in einem Axialschnitt in einem größeren Maßstab und
- Fig. 5: den Antrieb für den Abstreifer in einem Axialschnitt durch die Antriebswelle des Antriebsritzels in einem größeren Maßstab.

Das angedeutete Wasserkraftwerk weist eine zwischen einem Oberwasser 1 und einem Unterwasser 2 vorgesehene Turbine 3 auf, die als Rohrturbine ausgeführt ist, was jedoch keineswegs zwingend ist. Im Bereich des Oberwassers 1, das mithilfe einer Verschlussklappe 4 zu einem Oberwasserstand 5 aufgestaut ist, ist ein Einlaufschacht 6 vorgesehen, dessen über die Oberwassersohle 7 vorstehende Schachtkrone 8 unterhalb des Oberwasserstands 5 endet. An den Einlaufschacht 6 schließt ein Triebwasserkanal 9 zur Beaufschlagung der Turbine 3 an, deren Saugrohr 10 im Bereich des Unterwassers 2 mündet.

Die Schachtkrone 8 ist mit einem Rechen 11 abgedeckt, der die Form eines sich gegen den Einlaufschacht 6 verjüngenden Konus aufweist und in ein Fallrohr 12 mündet, das mit dem Unterwasser 2 durch eine Austragsleitung 13 unter einer Umgehung der Turbine 3 verbunden ist. Diese Austragsleitung 13 ist mit einer Absperreinrichtung 14 versehen.

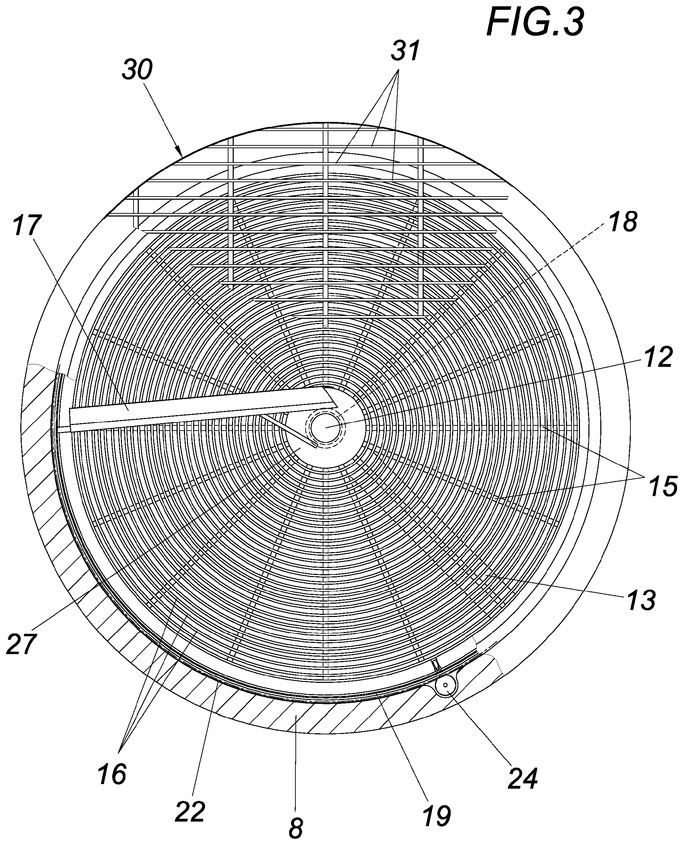

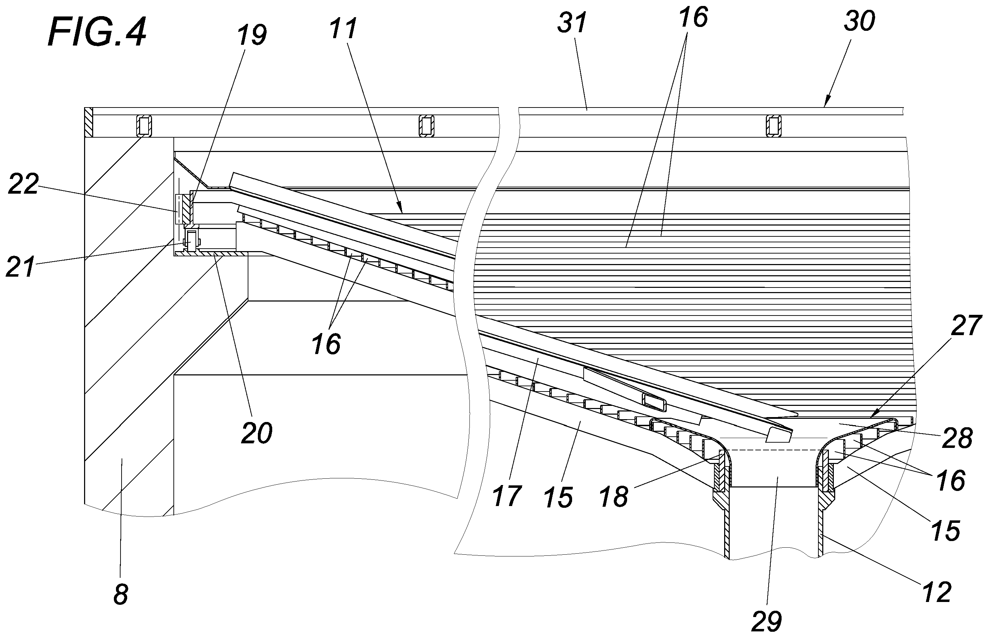

Wie insbesondere den Fig. 3 und 4 entnommen werden kann, ergeben sich vorteilhafte Konstruktionsbedingungen, wenn der konische Rechen 11 in Richtung von Erzeugenden des Konus zwischen dem Fallrohr 12 und der Schachtkrone 8 verlaufende, über den Schachtumfang verteilte Tragarme 15 aufweist, die über die Tragarmlänge verteilt zur Konusachse koaxiale Kreisringlamellen 16 aufnehmen.

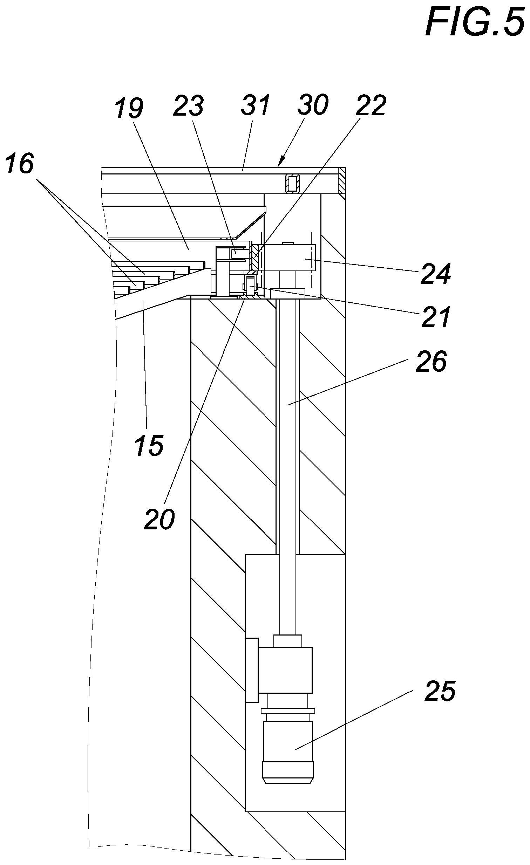

Zum Reinigen des konischen Rechens 11 ist ein an den Kreisringlamellen 16 anliegender Abstreifer 17 vorgesehen, der sich zwischen dem Fallrohr 9 und dem Außenrand des konischen Rechens 11 erstreckt. Der Abstreifer 17 ist einerseits auf einem auf dem Fallrohr 12 drehbar gelagerten Führungsring 18 und anderseits auf einem Tragring 19 abgestützt, der den konischen Rechen 11 im Bereich seines Außenrandes umschließt und mithilfe von entlang einer Rollbahn 20 auf der Schachtkrone 8 abrollenden Laufrollen 21 koaxial zur Konusachse drehbar gelagert ist. Zum Drehantrieb des Abstreifers 17 um die Konusachse ist der Tragring 19 mit einem Zahnkranz 22 versehen, der gemäß der Fig. 5 im Bereich einer Gegenrolle 23 mit einem Antriebsritzel 24 kämmt, das auf einer von einem Motor 25 antreibbaren Antriebswelle 26 sitzt. Der Abstreifer 17 kann demnach durch den um seine Achse drehend angetriebenen Tragring 19 um die Konusachse entlang des konischen Rechens 11 gedreht werden, um das vom Rechen 11 zurückgehaltene, noch nicht vom zentralen Fallrohr 12 aufgenommene Rechengut von den Kreisringlamellen 16 abzustreifen und radial einwärts zum Fallrohr 12 zu fördern.

Zu diesem Zweck kann der Abstreifer 17 in Abhängigkeit von den jeweiligen Abmessungen des konischen Rechens 11 unterschiedlich ausgeführt werden, und zwar nicht nur in Bezug auf seinen Längsverlauf vom Tragring 19 zum Führungsring 18, sondern auch hinsichtlich seiner Querschnittsform, um ein Anstauen des Rechenguts vor dem Abstreifer weitgehend zu unterbinden. So kann der Abstreifer 17 beispielsweise eine seinem Längsverlauf folgende, rinnenförmige Aufnahme für das Rechengut aufweisen, die eine Gleitbahn bildet, entlang der das Rechengut unbehindert durch die Kreisringlamellen 16 zum Fallrohr 12 geführt wird. Zur vorteilhaften Übergabe des entlang des Abstreifers 17 geförderten Rechenguts an das Fallrohr 12 sollte das Ablaufende des Abstreifers 17 tangential zum Fallrohr 12 verlaufen. Hierfür kann der Abstreifer einen geraden, gekrümmten, aber auch einen geknickten Längsverlauf aufweisen.

Um einen unbehinderten Übergang vom konischen Rechen 11 in das Fallrohr 12 zu schaffen, ist ein kragenförmiger Leitring 27 vorgesehen, der mit seinem Kragen 28 zumindest die innerste Kreisringlamelle 16 übergreift und mit seinem Halsansatz 29 in das Fallrohr 12 eingreift, wie dies der Fig. 4 entnommen werden kann. Da der kragenförmige Leitring 27 auch den Führungsring 18 zur Abstützung des Abstreifers 17 abdeckt, muss der Leitring 27 mit dem Führungsring 18 mitgedreht werden können und ist daher vorzugsweise am Führungsring 18 angeordnet.

Zum Reinigen des konischen Rechens 11 wird der Abstreifer 17 um die Konusachse gedreht und löst an den Kreisringlamellen 16 zurückgehaltenes Rechengut von den Kreisringlamellen 16 ab, wobei das Rechengut entlang des Abstreifers 17 zum Fallrohr 12 gefördert wird. Wird während der Rechenreinigung die Absperreinrichtung 14 der Austragsleitung 13 geöffnet, so wird das zum Fallrohr 12 gelangende Rechengut mit der Strömung durch das Fallrohr 12 mitgerissen und unter einer Umgehung der Turbine 3 in den Bereich des Unterwassers 2 ausgetragen. Mit der auf den Trichterbereich des Rechens 11 durchgreifenden axialen Strömung bildet sich im Trichterbereich eine Wirbelströmung aus, die das Ablösen des Rechenguts von den Kreisringlamellen 16 und seine Förderung zum Fallrohr unterstützt.

Da durch das Fallrohr 12 nur Rechengut ausgetragen werden kann, das kleiner als der Fallrohrquerschnitt ist, muss dafür Sorge getragen werden, dass diese Bedingung durch einen dem konischen Rechen 11 vorgelagerten Grobrechen nicht unterlaufen werden kann. Zu diesem Zweck kann die Schachtkrone 8 oberhalb des konischen Rechens 11 zusätzlich mit einem ebenen Rechen 30 abgedeckt werden, dessen Rechenstäbe 31 einen entsprechenden, vom Durchmesser des Fallrohrs 12 abhängigen, gegenseitigen Abstand aufweisen. Die Rechenstäbe 31 können dabei auch einander kreuzen, was jedoch aus Übersichtlichkeitsgründen nicht dargestellt ist. Aus diesem Grund sind auch die gegenseitigen Abstände der Rechenstäbe 31 und der Kreisringlamellen 16 nicht maßstäblich dargestellt.

## Patentansprüche

1. Wasserkraftwerk mit einer Rechenanordnung zwischen Ober- und Unterwasser (1, 2), die einen oberwassergespeisten, einer Turbine (3) vorgelagerten Einlaufschacht (6), dessen unterhalb eines Oberwasserstandes (5) endende Schachtkrone (8) durch einen Rechen (11) abgedeckt ist, und einen am Rechen (11) aufliegenden, um eine Achse drehbaren Abstreifer (17) umfasst, **dadurch gekennzeichnet, dass** der Rechen (11) einen sich in Durchströmrichtung verjüngenden, in einem Fallrohr (12) mündenden Konus bildet, dass das Fallrohr (12) an eine absperrbare, im Unterwasserbereich mündende Austragsleitung (13) anschließt und dass der zwischen dem Fallrohr (12) und dem Außenrand des konischen Rechens (11) verlaufende Abstreifer (17) um die Konusachse drehbar ist.

2. Wasserkraftwerk nach Anspruch 1, **dadurch gekennzeichnet, dass** der konische Rechen (11) über seinen Umfang verteilte, in Richtung von Erzeugenden des Konus verlaufende Tragarme (15) und auf den Tragarmen (15) abgestützte, über die Tragarmlänge verteilte, zur Konusachse koaxiale Kreisringlamellen (16) aufweist.

3. Wasserkraftwerk nach Anspruch 1 oder 2, **dadurch gekennzeichnet, dass** der Abstreifer (17) zwischen einem drehbar auf dem Fallrohr (12) gelagerten Führungsring (18) und einem drehbar auf der Schachtkrone (8) gelagerten, den Außenrand des konischen Rechens (11) umschließenden Tragring (19) angeordnet ist, der einen mit einem Antriebsritzel (24) kämmenden Zahnkranz (22) aufweist.

4. Wasserkraftwerk nach einem der Ansprüche 1 bis 3, **dadurch gekennzeichnet, dass** im Übergangsbereich vom Rechen (11) zum Fallrohr (12) ein mit einem Halsansatz (29) in das Fallrohr (12) eingreifender, kragenförmiger Leitring (27) vorgesehen ist.

5. Wasserkraftwerk nach Anspruch 3 und 4, **dadurch gekennzeichnet, dass** der kragenförmige Leitring (27) auf dem Führungsring (18) vorgesehen ist.

6. Wasserkraftwerk nach einem der Ansprüche 1 bis 5, **dadurch gekennzeichnet, dass** die Schachtkrone (8) oberhalb des konischen Rechens (11) mit einem ebenen Rechen (30) abgedeckt ist, dessen Rechenstäbe (31) einen gegenseitigen Abstand kleiner als der Durchmesser des Fallrohrs (12) aufweisen.

## Claims

1. Hydropower plant with a trash rack arrangement between upstream water (1) and downstream water (2), which comprises an upstream-fed inlet shaft (6) arranged upstream of a turbine (3), the shaft crown (8) of which ends below an upstream water level (5) and is covered by a trash rack (11), and a scraper (17) bearing on the trash rack (11) and rotatable about an axis, **characterized in that** the trash rack (11) forms a cone tapering in the flow-through direction and opening into a downpipe (12), that the downpipe (12) connects to a closable discharge line (13) opening in the downstream water region, and that the scraper (17) running between the downpipe (12) and the outer edge of the conical trash rack (11) is rotatable about the cone axis.

2. Hydropower plant according to claim 1, **characterized in that** the conical trash rack (11) has support arms (15) distributed over its circumference and extending in the direction of generators of the cone, and annular lamellae (16) supported on the support arms (15), distributed over the support-arm length, and coaxial with the cone axis.

3. Hydropower plant according to claim 1 or 2, **characterized in that** the scraper (17) is arranged between a guide ring (18) rotatably mounted on the downpipe (12) and a support ring (19) rotatably mounted on the shaft crown (8) and enclosing the outer edge of the conical trash rack (11), which support ring has a ring gear (22) meshing with a drive pinion (24).

4. Hydropower plant according to one of claims 1 to 3, **characterized in that** in the transition region from the trash rack (11) to the downpipe (12) a collar-shaped control ring (27) is provided which engages into the downpipe (12) with a neck extension (29).

5. Hydropower plant according to claim 3 and 4, **characterized in that** the collar-shaped control ring (27) is provided on the guide ring (18).

6. Hydropower plant according to one of claims 1 to 5, **characterized in that** the shaft crown (8) above the conical trash rack (11) is covered with a planar trash rack (30), the trash rack bars (31) of which have a mutual spacing smaller than the diameter of the downpipe (12).

## Revendications

1. Centrale hydroélectrique avec un dispositif de grille entre les eaux amont et aval (1, 2), qui comprend un puits d'entrée (6) alimenté par les eaux amont et situé en amont d'une turbine (3), dont la couronne (8) se terminant en dessous d'un niveau d'eau amont (5) est recouverte par une grille (11), et un racleur (17) reposant sur la grille (11) et pouvant tourner autour d'un axe, **caractérisée en ce que** la grille (11) forme un cône se rétrécissant dans le sens du débit et débouchant dans un tuyau de descente (12), **en ce que** le tuyau de descente (12) est raccordé à une conduite d'évacuation (13) pouvant être fermée et débouchant dans la zone d'eau aval, et que le racleur (17) s'étendant entre le tuyau de descente (12) et le bord extérieur de la grille conique (11) peut tourner autour de l'axe du cône.

2. Centrale hydroélectrique selon la revendication 1, **caractérisée en ce que** la grille conique (11) comporte des bras de support (15) répartis sur sa circonférence et s'étendant dans la direction des génératrices du cône, ainsi que des lamelles annulaires (16) réparties sur la longueur des bras de support (15), coaxiales à l'axe du cône et s'appuyant sur les bras de support (15).

3. Centrale hydroélectrique selon la revendication 1 ou 2, **caractérisée en ce que** le racleur (17) est disposé entre une bague de guidage (18) montée de manière rotative sur le tuyau de descente (12) et un anneau de support enveloppant (19) monté de manière rotative sur la couronne du puits (8), qui entoure le bord extérieur de la grille conique (11) et qui comporte une couronne dentée (22) engrenant avec un pignon d'entraînement (24).

4. Centrale hydroélectrique selon l'une des revendications 1 à 3, **caractérisée en ce qu'**un anneau de conduite (27) en forme de collerette, s'engageant dans le tuyau de descente (12) par un col (29), est prévu dans la zone de transition entre la grille (11) et le tuyau de descente (12).

5. Centrale hydroélectrique selon les revendications 3 et 4, **caractérisée en ce que** l'anneau de conduite (27) en forme de collerette est prévu sur l'anneau de guidage (18).

6. Centrale hydroélectrique selon l'une des revendications 1 à 5, **caractérisée en ce que** la couronne du puits (8) au-dessus de la grille conique (11) est recouverte d'une grille plane (30) dont les barreaux (31) sont espacés les uns des autres d'une distance inférieure au diamètre du tuyau de descente (12).
